(19) Europäisches Patentamt
European Patent Office
Office européen des brevets

(11) **EP 2 669 345 A1**

(12) **EUROPEAN PATENT APPLICATION**

(43) Date of publication:
**04.12.2013 Bulletin 2013/49**

(51) Int Cl.:
**C09J 7/02** (2006.01)  **C09J 133/08** (2006.01)
**C08F 220/18** (2006.01)

(21) Application number: **13169710.4**

(22) Date of filing: **29.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.05.2012 JP 2012122676**

(71) Applicant: **NITTO DENKO CORPORATION**
**Ibaraki-shi, Osaka 567-8680 (JP)**

(72) Inventors:
• **Takahashi, Akiko**
 **Ibaraki-shi, Osaka 5678680 (JP)**
• **Ootake, Hironao**
 **Ibaraki-shi, Osaka 5678680 (JP)**
• **Yamamoto, Kenichi**
 **Ibaraki-shi, Osaka 5678680 (JP)**

(74) Representative: **Grünecker, Kinkeldey, Stockmair & Schwanhäusser**
 **Leopoldstrasse 4**
 **80802 München (DE)**

(54) **Pressure-Sensitive Adhesive Composition and Pressure-Sensitive Adhesive Sheet**

(57) The pressure-sensitive adhesive composition provided by the present invention comprises an acrylic polymer as a base polymer and a tackifier resin having a softening point of 125 °C or above. The tackifier resin content is less than 20 parts by mass relative to 100 parts by mass of the acrylic polymer.

Fig. 1

Fig. 2

2

| | 22 |
| 10 |
| 21 |
| 31 |

Fig. 3

3

21B — | 32 |
| 21 |
21A — | 31 |

Fig. 4

4

21B — | 21 |
21A — | 31 |

Fig. 5

5

21A — | 31 |
| 21 |
10A — | 10 |

Fig. 6

Fig. 7

Fig. 8

**Description**

BACKGROUND OF THE INVENTION

1. Field of the Invention

The present invention relates to a pressure-sensitive adhesive (PSA) composition and a PSA sheet.
The present application claims priority based on Japanese Patent Application No. 2012-122676 filed on May 30, 2012, and the entire contents thereof are incorporated herein by reference.

2. Description of the Related Art

In a PSA sheet, various properties are desired depending on its purpose and application. One of such properties is repulsion resistance, which is an ability to maintain a member made of a foam having elasticity (or "elastic foam", hereinafter) such as polyurethane foam, etc., in an elastically deformed state to conform a surface structure of an adherend to which the member is fixed via the PSA sheet, while resisting the member's own repulsion force to regain its original shape. For example, Japanese Patent Application Publication No. 2010-95610 discloses a PSA sheet that exhibits a prescribed repulsion resistance in a test carried out under a condition where the PSA sheet is adhered to elastic foam with a 2 kg roller.

SUMMARY OF THE INVENTION

A highly repulsion resistant PSA sheet is preferable for its good handling properties during applications to adherends. However, unlike a hard adherend, elastic foam as described above absorbs a force to pressure-bond a PSA sheet thereto by elastic deformation, and thus it is even difficult to pressure-bond the PSA sheet firmly to the elastic foam. In addition, if the PSA sheet is pressed hard to the elastic foam, the foam is strongly compressed (squashed) and this may damage the foam. Depending on the strength or the shape of a structure that supports the back of the elastic foam, it is difficult to sufficiently and evenly compress the elastic foam via the structure. Due to these issues, pressure-bonding a PSA sheet firmly to elastic foam requires extra force to compress the elastic foam and its handling can be stressful, requiring cautions, etc. Thus, a PSA sheet with greater handling properties for applications has been desired.
The present invention was made in view of such circumstances and a main objective thereof is to provide a PSA composition capable of increasing the handling properties for applications to elastic foam. Another objective of the present invention is to provide a PSA sheet that uses such a PSA composition.
The present invention provides a PSA composition comprising an acrylic polymer as a base polymer, and a tackifier resin having a softening point of 125 °C or above. The tackifier resin content is less than 20 parts by mass relative to 100 parts by mass of the acrylic polymer.
As described above, such a PSA composition contains a small amount of a tackifier resin that has a high softening point. Usually, for increasing the repulsion resistance, measures such as increasing the amount of tackifier resin, etc., are taken so as to obtain an adhesive strength strong enough to resist a repulsion force. In a conventional PSA composition, for obtaining good adhesive properties, etc., a tackifier resin is typically used at 20 parts by mass or more relative to 100 parts by mass of acrylic polymer. The present inventors, however, have come to find a way to increase the repulsion resistance without degrading the adhesive strength by using less tackifier resin as compared to conventional usages. The present invention employs a tackifier resin having a high softening point. A PSA sheet formed with such a PSA composition exhibit excellent repulsion resistance to elastic foam. In particular, even if it is pressure-bonded lightly to elastic foam, it exhibits excellent repulsion resistance (or "light-press repulsion resistance" hereinafter). This will lead to improved handling properties of the PSA sheet for applications. Such a constitution is highly practical for its simplicity, It is noted that the tackifier resin content being less than 20 parts by mass relative to 100 parts by mass of the acrylic polymer means the content being greater than zero part by mass, but less than 20 parts by mass.
In a preferable embodiment of the art disclosed herein, the PSA composition comprises a solvent comprising primarily an aqueous solvent and/or ethyl acetate. In terms of the environmental health, such a PSA composition is preferable to a composition comprising primarily an aromatic hydrocarbon-based solvent such as toluene and the like. The term "aqueous solvent" refers to water or a mixed solvent comprising primarily water (containing 50 % by mass or more of water). Besides water, the other solvent constituting the mixed solvent may be one, two or more species selected from various organic solvents (lower alcohols, etc.) that can be mixed homogeneously with water. In particular, as compared to a PSA sheet using a solvent-based PSA composition, a PSA sheet fabricated with a PSA composition comprising an aqueous solvent, typically a water-dispersed (emulsion-based) PSA composition, tends to exhibit poor adhesion (rough surface adhesion) to an adherend having a finely textured surface such as foam. According to the constitution of the present invention, however, excellent repulsion resistance can be obtained even in an embodiment of a water-dispersed PSA composition.

In a preferable embodiment of the art disclosed herein, the acrylic polymer is a polymer obtainable by polymerizing a monomer component comprising, as a primary monomer, a monomer represented by the following formula (1):

$$CH_2=CR^1COOR^2 \qquad (1)$$

(in the formula, $R^1$ is a hydrogen atom or a methyl group, and $R^2$ is an alkyl group having 6 or more carbon atoms) while the tackifier resin is selected from rosin-based resins, rosin derivative resins and terpene-based resins. With the acrylic polymer being highly soluble with the tackifier resin, such a PSA composition can stably exhibit various properties such as adhesive strength, holding power, light-press repulsion resistance, and so on.

The present invention also provides a PSA sheet comprising a PSA layer. The PSA layer comprises an acrylic polymer as a base polymer and a tackifier resin having a softening point of 125 °C or above. The tackifier resin content is less than 20 parts by mass relative to 100 parts by mass of the acrylic polymer.

In a preferable embodiment of the art disclosed herein, the PSA sheet satisfy the following property: (A) in a light-press repulsion resistance test carried out by backing a 10 mm wide by 50 mm long test piece of the PSA sheet with a 10 mm thick polyurethane foam as an elastic foam (a soft polyurethane foam), pressure-bonding a portion from a first end of the length direction up to a 10 mm line of the backed test piece to a 2 mm thick acrylonitrile-butadiene-styrene copolymer resin plate (ABS plate) over a region around an outer edge on a face thereof with a 1 kg roller moved back and forth once, folding the remaining portion of the test piece over the edge of the ABS plate and pressure-bonding it to the other face of the plate, storing the resultant in an environment at 23 °C and 50 % RH for 24 hours and then in an environment at 70 °C for 2 hours, and measuring the distance floated above the ABS plate surface with respect to the first end of the length direction of the test piece, the floated distance is 2 mm or smaller. As such, a PSA sheet that exhibits excellent repulsion resistance even when pressure-bonded lightly with a 1 kg roller provides excellent handling properties for applications especially when it is constituted with an elastic foam as the substrate or used in an application involving adhesion to an elastic foam.

In a preferable embodiment of the art disclosed herein, the PSA sheet satisfies the following property: (B) when the PSA sheet is stored at 65 °C for two hours, the total amount of toluene released from the PSA sheet is 2 μg or less per 100 cm$^2$ area of the PSA sheet. A PSA sheet having such a constitution releases less toluene, and thus it is preferable in view of the environmental health.

In a preferable embodiment of the art disclosed herein, the PSA sheet satisfies the following property: (D) exhibiting an adhesive strength to a polypropylene plate of 8 N/20mm or greater. A PSA sheet exhibiting such a great adhesive strength to a polypropylene (PP) plate is preferable for an application where an elastic foam which can be a substrate or an adherend is adhered to a member made of a polyolefin such as PP and the like.

In a preferable embodiment of the art disclosed herein, the PSA sheet is adhered to an automobile interior component. Elastic foam such as polyurethane foam, etc., is widely used as a cushioning material or the like, for instance, in an embodiment where it is fixed via a double-faced PSA sheet to a desirable location (adherend) in an automobile interior, or in an embodiment involving adhesion of a single-faced PSA sheet comprising the elastic foam as the substrate. In such embodiments of use, the PSA sheet of the present invention may preferably suppress undesired peel-off of the elastic foam.

The present invention also provides a self-adhesive polyurethane foam. The self-adhesive polyurethane foam comprises a PSA sheet disclosed herein and a polyurethane foam (typically an elastic polyurethane foam such as so-called a soft polyurethane foam) adhered to a PSA layer of the PSA sheet, with the PSA sheet being constituted as a double-faced PSA sheet. The PSA sheet used herein exhibits excellent light-press repulsion resistance, and thus can be preferably used for various applications involving adhesion of polyurethane foam to an adherend.

BRIEF DESCRIPTION OF THE DRAWINGS

Fig. 1 shows a cross-sectional view schematically illustrating a constitutional example of the PSA sheet.

Fig. 2 shows a cross-sectional view schematically illustrating another constitutional example of the PSA sheet.

Fig. 3 shows a cross-sectional view schematically illustrating another constitutional example of the PSA sheet.

Fig. 4 shows a cross-sectional view schematically illustrating another constitutional example of the PSA sheet.

Fig. 5 shows a cross-sectional view schematically illustrating another constitutional example of the PSA sheet.

Fig. 6 shows a cross-sectional view schematically illustrating another constitutional example of the PSA sheet.

Fig. 7 shows a diagram illustrating a method of light-press repulsion resistance test.

Fig. 8 shows a diagram illustrating the method of light-press repulsion resistance test.

DETAILED DESCRIPTION OF THE INVENTION

Preferred embodiments of the present invention are described below, Matters necessary to practice this invention other than those specifically referred to in this description may be understood as design matters to a person of ordinary skill in the art based on the conventional art in the pertinent field. The present invention can be practiced based on the contents disclosed in this description and common technical knowledge in the subject field. In the description below, members and sites providing the same effect are may be indicated by a common reference numeral, and redundant descriptions may be omitted or simplified.

The PSA composition disclosed herein will be described more in detail. The form of the PSA composition is not particularly limited. It can be in various forms such as a solvent-based form, emulsion-based form, aqueous solution-based form, activating energy ray-curable (e.g., ultraviolet ray-curable) form, hot-melt form, and so on. In typical, it is prepared by polymerizing a monomer component in a suitable solvent to obtain a solution or a dispersion of an acrylic polymer, and adding other components to the solution or the dispersion as necessary. Alternatively, it may be a solvent-based PSA composition obtainable by dissolving an acrylic polymer obtained via emulsion polymerization followed by a processes such as pH adjustment, salt precipitation, purification, etc., as necessary, along with a crosslinking agent and various additives (optional components), etc., as necessary in an organic  solvent such as toluene, ethyl acetate, or the like.

The PSA composition is preferably in a form where an adhesive component is dispersed or dissolved in a non-toluene-based organic solvent (i.e., non-toluene-based solvent, topically a solvent substantially free of toluene) such as an aqueous solvent or ethyl acetate, etc. Herein, the term "aqueous solvent" encompasses water and a mixed solvent comprising primarily water. A composition comprising an adhesive component in an aqueous solvent is referred to as an aqueous PSA composition. Among such compositions, a composition in a form where an adhesive component is dispersed in an aqueous solvent is referred to as a water-dispersed (emulsion-based) PSA composition. A composition in a form where an adhesive component is dissolved in an aqueous solvent is referred to as an aqueous solution-based PSA composition. A composition comprising an adhesive component in ethyl acetate is referred to as an ethyl acetate solvent-based PSA composition. In an ethyl acetate solvent-based PSA composition, an adhesive component is typically dissolved in the ethyl acetate. These aqueous PSA compositions and ethyl acetate solvent-based PSA compositions are typical examples of the so-called "non-toluene-based PSA composition". Among these, water-dispersed PSA compositions are preferable in view of the working environment since the organic solvent content is small or zero, causing less stress to the natural environments during production of PSA sheets. Hereinafter, a water-dispersed PSA composition is mainly described while the PSA composition according to the present invention is not to be limited to a water-dispersed PSA composition.

The PSA composition comprises an acrylic polymer as a base polymer (a primary component among polymer components, a primary adhesive component). Herein, the term "acrylic polymer" refers to a polymer (copolymer) synthesized by polymerizing a monomer component (a single monomer species or a monomer mixture) that comprises an alkyl (methacrylate as a primary component (or simply the "primary monomer" hereinafter) and may further comprise a secondary monomer that is copolymerizable with the alkyl (meth)acrylate. The term "(meth)acrytate" comprehensively refers to acrylate and methacrylate. Similarly, the term "(meth)acryloyl" comprehensively refers to acryloyl and methacryloyl while the term "(meth)acryl" comprehensively refers to acryl and methacryl.

The monomer component used to obtain the acrylic polymer comprises, as a primary monomer, a monomer represented by the formula:

$$CH_2=CR^1COOR^2$$

(in the fomula, $R^1$ is a hydrogen atom or a methyl group, and $R^2$ is an alkyl group). The alkyl group can be a straight chain or a branched chain. The $R^2$ alkyl group preferably has 1 to 20 carbon atoms (such a range of the number of carbon atoms may be indicated as $C_{1-20}$, hereinafter). In other words, as a primary monomer, a $C_{1-20}$ alkyl (meth)acrylate can be preferably used. In a preferable embodiment, of the entire monomer component, 70 % by mass or more (typically 70 to 99.5 % by mass) is a $C_{1-14}$ alkyl (meth)acrylate, for example, a $C_{1-10}$ alkyl (meth)acrylate. The primary monomer may be one, two or more species selected from the ranges described above.

As the primary monomer, it is preferable to use a monomer (or simply "monomer A" hereinafter) with $R^2$ in the formula being an alkyl group having 6 or more carbon atoms. The number of carbon atoms of the alkyl group ($R^2$) in the

monomer A is preferably 7 or greater (typically 8). This will make it highly compatible with the tackifier resin described later when the tackifier resin is selected from rosin-based resins, rosin derivative resins and terpene-based resins (typically selected from rosin-based resins and rosin derivative resins), allowing the resulting PSA composition to stably exhibit various properties such as adhesive strength, holding power, light-press repulsion resistance, and so on. The number of carbon atoms is suitably about 20 or smaller. Preferable examples of the monomer A include n-hexyl (meth) acrylate, n-heptyl (meth)acrylate, n-octyl (meth)acrylate, isooctyl (meth)acrylate, 2-ethylhexyl (meth)acrylate, n-nonyl (meth)acrylate, isononyl (meth)acrylate, n-decyl (meth)acrylate, isodecyl (meth)acrylate, and the like. Among these, 2-ethylhexyl acrylate (2EHA) is particularly preferable. Among these monomer A species, can be used one species solely or a combination of two or more species.

For the primary monomer, a monomer other than the monomer A, that is, an alkyl (meth)acrylate (or simply "monomer B" hereinafter) with the alkyl group having 1 to 5 carbon atoms, can be used in order to adjust the glass transition temperature (Tg) or to increase the cohesive strength. Preferable examples of the monomer B include methyl (meth)acrylate, ethyl (meth)acrylate, n-propyl (meth)acrylate, isopropyl (meth)acrylate, n-butyl (meth)acrylate, isobutyl (meth)acrylate, s-butyl (meth)acrylate, t-butyl (meth)acrylate, n-pentyl (meth)acrylate, isopentyl (meth)acrylate, and the like. Among these, n-butyl acrylate (BA) and methyl acrylate (MA) are particularly preferable. Among these, can be used one species solely or a combination of two or more species.

The proportion of monomer A contained in the entire monomer component used to obtain the acrylic polymer is preferably 20 % by mass or greater. From the standpoint of increasing the hydrophobicity of the resulting PSA and improving the compatibility with a rosin-based, a rosin derivative or a terpene-based tackifier resin, the proportion of monomer A is more preferably 30 % by mass or greater, or even more preferably 50 % by mass or greater (e.g., 70 % by mass or greater, typically 80 % by mass or greater). As the primary monomer, the monomer A can be used solely. For similar reasons, the proportion of monomer B contained in the entire monomer component is suitably 80 % by mass or less (e.g., 70 % by mass or less), or it can be 50 % by mass or less (e.g., 30 % by mass or less, typically 20 % by mass or less). The monomer composition may be that the monomer B is not used as a primary monomer.

The proportion of the primary monomer contained in the entire monomer component used to obtain the acrylic polymer is preferably 60 % by mass or greater (typically 60 to 98 % by mass), or more preferably 70 % by mass or greater (typically 80 to 95 % by mass). It is particularly preferable to be 90 % by mass or greater (typically 90 to 95 % by mass).

As an optional component in the acrylic polymer, a secondary monomer copolymerizable with the alkyl (meth) acrylate as the primary monomer can be used. As the secondary monomer, for example, can be used an ethylenically unsaturated monomer having one, two or more different functional groups selected from carboxyl groups, alkoxysilyl groups, hydroxide group, amino groups, amide groups, epoxy groups and so on. These functional group-containing monomers are useful for introducing crosslinking sites to the acrylic polymer. The type of secondary monomer and its content (copolymerization ratio) can be suitably selected in view of the type and amount of crosslinking agent used, the mode of the crosslinking reaction, the desirable degree of crosslinking (crosslink density), and so on.

Among these functional group-containing monomers, can be preferably used a monomer selected from monomers containing a carboxyl group and their acid anhydrides (or collectively "carboxyl group-containing monomers" hereinafter). Specific examples of carboxyl group-containing monomers include ethylenically unsaturated mono-carboxylic acids such as acrylic acid (AA), methacrylic acid (MAA), crotonic acid, etc.; ethylenically unsaturated dicarboxylic acids such as maleic acid, itaconic acid, citraconic acid, etc.; anhydrides of ethylenically unsaturated dicarboxylic acids such as maleic acid anhydride, itaconic acid anhydride, etc.; and the like. Among these, can be used one species solely or a combination of two or more species. Examples of particularly preferable carboxyl group-containing monomers include AA and MAA. One of these can be used solely, or AA and MAA can be used in combination at a desirable ratio. Use of AA and MAA in combination will increase the light-press repulsion resistance. The mass ratio of AA to MAA (AA: MAA) can be, for instance, in a range of about 1:10 to 10:1, or preferably in a range of about 1:4 to 4:1 (e.g., 1:2 to 2: 1). When a carboxyl group-containing monomer is copolymerized, the proportion of the carboxyl group-containing monomer contained in the entire monomer component used to obtain the acrylic polymer is preferably about 5 % by mass or less (e.g., 0.5 to 4 % by mass, e.g., 1 to 2.5 % by mass).

Other examples of preferably usable functional group-containing monomers include a monomer having an alkoxysilyl group. Specific examples of such alkoxysilyl group-containing monomers include 3-(meth)acryloxypropyltrimethoxysilane, 3-(meth)aclyloxypropyltriethoxysilane, 3-(meth)acryloxypropylmethyldimethoxysilane, 3-(meth)acryloxypropylmethyldiethoxysilane, and the like. Copolymerizing such an alkoxysilyl group-containing monomer can be an advantageous means for making a PSA sheet capable of combining higher levels of light-press adhesive strength (adhesive strength upon light pressure-bonding) and holding power. When copolymerizing an alkoxysilyl group-containing monomer, the proportion of the alkoxysilyl group-containing monomer contained in the entire monomer component is preferably about 0.005 to 1 % by mass (e.g., 0.01 to 0.1 % by mass).

It is preferable to use the functional group-containing monomer, which may include the carboxyl group-containing monomer and/or the alkoxysilyl group-containing monomer, in a range of 15 % by mass or less (e.g., 0.5 to 15 % by mass, preferably 1 to 10 % by mass) of the entire monomer component. With use of the functional group-containing monomer in an amount within these ranges, suitable cohesive strength can be obtained.

Examples of the other monomer (or "the other copolymerizing monomer, hereinafter) that can be copolymerized in the acrylic polymer include vinyl esters such as vinyl acetate, vinyl propionate, etc.; aromatic vinyl compounds such as styrene, $\alpha$-methylstyrene, etc.; non-aromatic ring-containing (meth)acrylates such as cyclohexyl (meth)acrylate, isobonryl (meth)acrylate, etc.; aromatic ring-containing (meth)acrylates such as phenyl (meth)acrylate, benzyl (meth)acrylate, etc.; alkoxy group-containing monomers such as methoxyethyl (meth)acrylate, ethoxyethyl (meth)acrylate, etc.; vinyl ethers such as methyl vinyl ether, ethyl vinyl ether, etc.; and the like. Yet other examples include multifunctional monomers having two or more polymerizable functional groups per molecule such as ethylene glycol di(meth)acrylate, pentaerythritol di(meth)acrylate, trimethylolpropane tri(meth)acrylate, pentaerythritol tri(meth)acrylate, dipentaerythritol hexa(meth)acrylate, and the like. Such other copolymerizing monomers can be used as needed in suitable amounts.

A suitable polymerization initiator can be selected and used from known or commonly used polymerization initiators in accordance with the type of polymerization method. For instance, in emulsion polymerization, an azo-based polymerization initiator can be preferably used. Specific examples of azo-based polymerization initiators include 2,2'-azobisisobutyronitrile, 2,2'-azobis(2-methylpropionamidine) disulfate, 2,2'-azobis(2-amidinopropane) dihydrochloride, 2,2'-azobis[2-(5-methyl-2-imidazoline-2-yl)propane] dihydrochloride, 2,2'-azobis(N,N'-dimethyleneisobutylamidine), 2,2'-azobis[N-(2-carboxyethyl)-2-methylpropionamidine] hydrate, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane), dimethyl-2,2'-azobis(2-methylpropionate), and the like.

Other examples of polymerization initiator include persulfate salts such as potassium persulfate, ammonium persulfate, etc.; peroxide-based initiators such as benzoyl peroxide, t-butyl hydroperoxide, di-t-butyl peroxide, t-butyl peroxybenzoate, dicumyl peroxide, 1, 1-bis(t-butylperoxy)-3,3,5-trimethylcyclohexane, 1,1-bis(t-butylperoxy)cyclododecane, hydrogen peroxide, etc.; and the like. Yet other examples of polymerization initiator include redox-based initiators by combination of a oxidizing agent and a reducing agent. Example of such a redox-based initiator include combination of a peroxide (aqueous hydrogen peroxide, etc.) and ascorbic acid, combination of a persulfate and sodium hydrogen sulfite, and the like.

Among these polymerization initiators, can be used one species solely or a combination of two or more species. The polymerization initiator can be used in a typical amount, which can be selected, for instance, from a range of about 0.005 to 1 part by mass (typically 0.01 to 1 part by mass) relative to 100 parts by mass of the entire monomer component.

For the polymerization, if necessary, a heretofore known chain transfer agents (which can be considered as a molecular weight-adjusting agent or a polymerization degree-adjusting agent) of various types can be used. The chain transfer agent can be, for example, one, two or more species selected from mercaptans such as n-lauryl mercaptan, glycidyl mercaptan, 2-mercaptoethanol, and the like. In particular, n-lauryl mercaptan can be used preferably.

Alternativety, as the chain transfer agent, can be used a sulfur-containing chain transfer agent comprising primarily one, two or more species of mercaptan selected from tertiary mercaptans and aromatic mercaptans. A mercaptan having such a structure is unlikely to be a source of a sulfur-containing gas in an acrylic polymer synthesized in the presence of the mercaptan. Thus, according to a PSA composition comprising such an acrylic polymer, can be formed a PSA sheet exhibiting good adhesive performance and the prevention of metal corrosion. In particular, tertiary mercaptans are preferable.

Specific examples of tertiary mercaptans include tertiary-butyl mercaptan, tertiary-octyl mercaptan, tertiary-nonyl mercaptan, tertiary-laruryl mercaptan, tertiary-tetradecyl mercaptan, tertiary-hexadecyl mercaptan, and the like. Specific examples of aromatic mercaptans include phenyl mercaptan, 4-tolyl mercaptan, 4-methoxyphenyl mercaptan, 2,4-dimethylbenzenethiol, 4-aminobenzenethiol, 4-fluorobenzenethiol, 4-bromobenzenethiol, 4-iodobenzenethiol, 4-t-butylphenyl mercaptan, 1-naphthyl mercaptan, 1-azulenethiol, 1-anthracenethiol, 4,4'-th iobenzenethiol, and the like. The aromatic mercaptan can be a hetero aromatic mercaptan such as 2-pyridyl mercaptan, 2-pyrrolyl mercaptan, 2-indolyl mercaptan, 2-furanyl mercaptan, 2-thiophenethiol, 2-benzothiophenethiol, 2-mercaptopyrimidine, or the like. Among these, can be used one species solely or a combination of two or more species. In particular, tertiary-lauryl mercaptan is especially preferable.

The chain transfer agent can be used in an amount of about 0.001 to 0.5 part by mass relative to 100 parts by mass of the entire monomer component. The amount used may be about 0.02 to 0.1 part by mass.

For preparation of the acrylic polymer, an emulsifier can be used as necessary. As the emulsifier, can be used any of anionic, nonionic and cationic emulsifier. It is usually preferable to use an anionic or a nonionic emulsifier. These emulsifiers can be preferably used, for instance, when subjecting the monomer component to emulsion polymerization, when dispersing an acrylic polymer obtained by a different method in water, or in like situations. Examples of anionic emulsifiers include sodium lauryl sulfate, ammonium lauryl sulfate, sodium dodecyl benzene sulfonate, sodium polyoxyethylene alkyl ether sulfate, ammonium polyoxyethylene alkyl phenyl ether sulfates, sodium polyoxyethylene alkyl phenyl ether sulfates, and the like. Examples of nonionic emulsifiers include polyoxyethylene alkyl ethers, polyoxyethylene alkyl phenyl ethers, and the like. May be used also a radically polymerizing emulsifier (a reactive emulsifier) having a structure of the anionic or nonionic emulsifier with a radically polymerizing group (propenyl group, etc.) incorporated therein. Alternatively, an emulsifier free of such a radically polymerizing group can be used solely. Among these emulsifiers, can be used one species solely or a combination of two or more species.

The amount of emulsifier used is not particularly limited as long as it allows preparation of an emulsified acrylic polymer. It is usually suitable to select from a range of, for example, about 0.2 to 10 parts by mass (preferably 0.5 to 5 parts by mass) relative to 100 parts by mass of the acrylic polymer based on the solid content.

In a preferable embodiment of emulsion polymerization of the monomer component disclosed herein, the polymerization reaction of the monomer component is carried out by supplying the monomer component to a reaction vessel containing a polymerization initiator and keeping the system at a polymerization temperature (preferably around 40 °C to 80 °C, e.g., about 50 °C to 70 °C) above ambient temperature. It is usually preferable to complete supplying of the polymerization initiator at the same time as or prior to the completion of addition of the monomer component. Alternatively, at least a fraction of the monomer component is supplied to a reaction vessel containing a portion of the polymerization initiator to initiate polymerization of the monomer component, and the remaining portion of the polymerization initiator may be supplied continuously over a prescribed time period or portionwise at prescribed time intervals. It is usually preferable to complete supplying of the polymerization initiator at the same time as or prior to completion of addition of the monomer component.

After carrying out polymerization of the monomer component using the polymerization initiator described above (i.e., a polymerization initiator added to a reaction vessel prior to completing addition of the monomer component; or the "primary initiator" hereinafter), when appropriate, it is preferable to add a supplemental polymerization initiator (or "supplemental initiator" hereinafter) to the content (reaction mixture) in the reaction vessel and further carry out the polymerization using the supplemental initiator. With such addition of a supplemental initiator, the amount of monomers remaining in the reaction mixture can be efficiently reduced (typically, the polymerization of the remaining monomers can be accelerated). As a result, it can contribute to decrease the amount of TVOC (total volatile organic compounds) and odors in the PSA sheet. The supplemental initiator used may be the same as or different from the primary polymerization initiator. As a supplemental initiator capable of efficiently reducing the amount of remaining monomers, can be used a polymerization initiator having a half-life temperature lower than that of the primary initiator. As such a supplemental initiator, it is preferable to use a redox-based polymerization initiator. The amount of the supplemental initiator used is not particularly limited, and it can be selected from a range of, for instance, about 0.005 to 2 parts by mass relative to 100 parts by mass of the monomer component.

Although not particularly limited, it is preferable that the acrylic polymer (typically a water-dispersed acrylic polymer) has a gel fraction (mass fraction of the ethyl acetate-insoluble content in the polymer) of, for instance, about 30 to 70 %. The gel fraction of an acrylic polymer can be measured by the following method.

[Method for measuring gel fraction of acrylic polymer]

Approximately 0.1 g of an acrylic polymer (mass: $W_{c1}$ mg) as a measurement sample is wrapped into a pouch with a porous polytetrafluoroethylene resin membrane (mass: $W_{c2}$ mg) having an average pore diameter of 0.2 $\mu$m, and the opening is tied with twine (mass: $W_{c3}$ mg). This pouch is placed in a screw vial of volume 50 mL (one screw vial is used for each pouch), and the screw vial is filled with ethyl acetate. After this is left at room temperature (typically 23 °C) for 7 days, the pouch is taken out and dried at 130 °C for two hours, and the mass (mass: $W_{c4}$ mg) of the pouch is measured. The gel fraction of the acrylic polymer is determined by the substituting the respective values into the following equation:

$$\text{Gel fraction (\%)} = [(W_{c4} - W_{c2} - W_{c3})/W_{c1}] \times 100$$

As the porous polytetrafluoroethylene resin membrane, it is desirable to use trade name "NITOFURON (registered trade mark) NTF1122" available from Nitto Denko Corporation or a similar product. As a sample subjected to the measurement, for instance, an emulsion of the subject acrylic polymer dried at 130 °C for two hours can be used.

The acrylic polymer has a weight average molecular weight (Mw) preferably in a range of about $25 \times 10^4$ to $130 \times 10^4$, or more preferably about $30 \times 10^4$ to $100 \times 10^4$ (e.g., $40 \times 10^4$ to $95 \times 10^4$). With the Mw of the acrylic polymer being within the said range, the cohesiveness of the PSA can be improved; and therefore, when the PSA sheet is being peeled away from the adherend, the PSA sheet is unlikely to leave adhesive residue on the adherend surface. It is also able to produce good adhesion to an adherend (a foam, etc.) having a rough surface. Furthermore, in a PSA sheet (typically a double-faced PSA sheet) comprising a porous body such as a non-woven fabric, etc., as the substrate (support), it is well integrated in the porous body. Thus, when the PSA sheet is to be removed after having been adhered on the adherend for a long time, it is less likely to leave adhesive residue and tends to be less prone to issues such as being susceptible to tearing, etc. In the present description, the weight average molecular weight refers to a value based on standard polystyrene determined by performing a gel permeation chromatography (GPC) measurement with respect to a soluble portion (sol fraction) obtained by tetrahydrofuran (THF) extraction of a measurement sample (e.g., a non-volatile content obtained by drying an aqueous emulsion of the acrylic polymer).

The acrylic polymer preferably accounts for 50 % by mass or greater (e.g., 85 % by mass or greater, typically 95 % by mass or greater) of the non-volatile content in the PSA composition. The mass ratio of the acrylic polymer contained in the non-volatile content in the PSA composition is about 99 % by mass or less, and it is usually suitable to be 95 % by mass or less. The acrylic polymer used at a mass ratio in the said range may yield a good balance among adhesive properties including light-press repulsion resistance.

The PSA composition disclosed herein further comprises a tackifier resin. The tackifier resin has a softening point of 125 °C or above. By using a small amount of a tackifier resin having such a high softening point, the light-press repulsion resistance can be increased without impairing the adhesive strength. The softening point is preferably 140 °C or above, more preferably 150 °C or above, or particularly preferably 160 °C or above (typically 160 °C to 180 °C).

As the tackifier resin, can be used, for instance, one, two or more species selected from various tackifier resins such as rosin-based resins, rosin derivative resins, petroleum-based resins, terpene-based resins, phenol-based resins, ketone-based resins and the like. Examples of the rosin-based resin include rosins such as gum rosin, wood rosin, tall oil rosin, etc., as well as stabilized rosins (e.g., stabilized rosins obtained via disproportionation or hydrogenation of the said rosins), polymerized rosins (e.g., multimers, typically dimers, of the said rosins), modified rosins (e.g. unsaturated acid-modified rosins, etc., obtained by modification with unsaturated acids such as maleic acid, fumaric acid, (meth) acrylic acid, etc.), and the like. Examples of the rosin derivative resins include esterification products of the rosin-based resins, phenol-modification products thereof as well as esterification products of these, and the like. Examples of the petroleum-based resins include aliphatic petroleum resins, aromatic petroleum resins, copolymer-based petroleum resins, alicyclic petroleum resins, and hydrogenation products of these, and the like. Examples of the terpene-based tackifier resin include $\alpha$-pinene resins, $\beta$-pinene resins, aromatic group-modified terpene-based resins, terpene-phenol-based resins, and the like. Examples of the ketone-based resin include ketone-based resins produced by condensation between ketones (e.g., aliphatic ketones such as methyl ethyl ketone, methyl isobutyl ketone, acetophenone, etc.; alicyclic ketones such as cyclohexanone, methylcyclohexanone, etc.; and the like) and formaldehyde. Among these, can be used one species solely or a combination of two or more species. In particular, rosin-based resins, rosin derivative resins and terpene-based resins are preferable. For their good compatibility with acrylic polymers (typically acrylic polymers synthesized using 2EHA as the primary monomer), rosin-based resins and rosin derivative resins are especially preferable.

Such a tackifier resin is used preferably as an emulsion (a tackifier resin emulsion) containing the resin dispersed in water. For instance, when an acrylic polymer obtained by emulsion polymerization is used as the acrylic polymer, mixing of the polymer and an emulsion of the tackifier resin allows easy preparation of a PSA composition containing these components at a desirable ratio. For the tackifier resin emulsion, it is preferable to use an emulsion essentially free of at least aromatic hydrocarbon-based solvents (more preferably substantially free of aromatic hydrocarbon-based solvents as well as other organic solvents). By this, a PSA sheet having even less TVOC can be provided.

The tackifier resin content is less than 20 parts by mass based on the non-volatile content (solid content) relative to 100 parts by mass of the acrylic polymer. This will allow an increase in the light-press repulsion resistance. A relatively small amount of the tackifier resin contained in a water-dispersed PSA composition is advantageous also in providing the emulsion with great mechanical stability. Usually, polymer particles in an emulsion tend to coagulate due to mechanical stress such as shear and the like. Occurrence of such coagulation is likely to result in problems such as defective coating by the coagulated particles, etc. As described above, lower tackifier resin content will contribute to stabilize the state of the PSA composition with suppressed coagulation. This is a typical example of the mechanical stability. A component with a lower molecular weight contained in the tackifier resin may be deposited on a glass window and cause clouding of the glass. Because the PSA sheet disclosed herein uses a smaller amount of a tackifier resin as described above, such problems are suppressed. Thus, it is particularly suitable for applications around glass, typically for an application inside a room having glass windows or an application inside an automobile having glass windows. The tackifier resin content is preferably 18 parts by mass or less, more preferably 15 parts by mass or less, yet more preferably 10 parts by mass or less, or particularly preferably 5 parts by mass or less, relative to 100 parts by mass of the acrylic polymer. While the tackifier resin content should be higher than about zero part by mass relative to 100 parts by mass of the acrylic polymer, good adhesive strength can be obtained with a preferable amount of 1 part by mass or greater (more preferably 2 parts by mass or greater, typically 3 parts by mass or greater).

The PSA composition disclosed herein may comprise a tackifier resin having a relatively low softening point (or a "low softening point tackifier resin", hereinafter) in addition to the tackifier resin having a high softening point. The softening point of the low softening point tackifier resin is below 125 °C, and it may be 120 °C or below (typically 80 °C to 120 °C). The low softening point tackifier resin content is suitably less than 10 parts by mass (e.g., less than 5 parts by mass, typically less than 3 parts by mass) relative to 100 parts by mass of the acrylic polymer. In a preferable embodiment, the PSA composition can be essentially free of the low softening point tackifier resin.

The softening point of a tackifier resin as referred to herein is defined as a value measured based on the softening point test method (ring and ball method) specified in either JIS K 5902 or JIS K 2207. In particular, a sample is quickly melted at a lowest possible temperature, and with caution to avoid bubble formation, the melted sample is poured into a ring to the top, with the ring being placed on top of a flat metal plate. After cooled, any portion of the sample risen above the plane including the upper rim of the ring is sliced off with a small knife that has been somewhat heated. Following this, a support (ring support) is placed in a glass container (heating bath) having a diameter of 85 mm or larger and a height of 127 mm or larger, and glycerin is poured into this to a depth of 90 mm or deeper. Then, a steel ball (9.5 mm diameter, weighing 3.5 g) and the ring filled with the sample are immersed in the glycerin while preventing them from touching each other, and the temperature of glycerin is maintained at 20 °C $\pm$ 5 °C for 15 minutes. The steel ball is then placed at the center of the surface of the sample in the ring, and this is placed on a prescribed location of the support. While keeping the distance between the ring top and the glycerin surface at 50 mm, a thermometer is placed so that the center of the mercury ball of the thermometer is as high as the center of the ring, and the container is heated evenly by projecting a Bunsen burner flame at the midpoint between the center and the rim of the bottom of the container. After the temperature has reached 40 °C from the start of heating, the rate of the bath temperature rise must be kept at 5.0 °C $\pm$ 0.5 °C per minute. As the sample gradually softens, the temperature at which the sample flows out of the ring and finally touches the bottom plate is read as the softening point. Two or more measurements of softening point are performed at the same time, and their average value is used. For a tackifier resin having a softening point of 100 °C or below, water can be used in place of glycerin in the softening point test method.

As far as the effect of the present invention is not significantly impaired, the PSA composition may contain a crosslinking agent selected from crosslinking agents generally used in the field of PSA compositions, such as hydrazine-based crosslinking agents, epoxy-based crosslinking agents, carbodiimide-based crosslinking agents, isocyanate-based crosslinking agents, oxazoline-based crosslinking agents, aziridine-based crosslinking agents, metal chelate-based crosslinking agents, activated methylol-based crosslinking agents, activated alkoxymethyl-based crosslinking agents, silane coupling agents, and the like. Among these crosslinking agents, can be used one species solely or a combination of two or more species. Alternatively, the PSA composition can be made without using such a crosslinking agent.

The PSA composition disclosed herein may contain an acid or a base (aqueous ammonia, etc.) used for pH adjustment and so on. Examples of other optional components that can be contained in the composition include various additives generally used in the field of PSA compositions, such as viscosity-adjusting agents (typically thickners), leveling agents, plasticizers, fillers, colorants including pigments and dyes, etc., stabilizing agents, preservatives, anti-aging agents, and so on. With respect to these various additives, those heretofore known can be used according to typical methods. Since these do not particularly characterize the present invention, detailed descriptions are omitted.

The PSA sheet provided by the present invention comprises a PSA layer formed from a PSA composition disclosed herein. It may be a substrate-backed PSA sheet in a form having such a PSA layer on one or each face of a substrate (support), or it can be a substrate-free PSA sheet in a form where the PSA layer is retained by a release liner (the release liner can be considered as a substrate having a release face), or in other forms. The concept of the PSA sheet referred to herein includes so-called PSA tapes, PSA labels, PSA films and so on. The PSA layer typically has a continuous form while it is not limited to such a form, and it may be formed to have a regular or random pattern of dots, stripes, and so on. The PSA sheet provided by the present invention may be in a roll form or in an unrolled sheet form. Alternatively, the PSA sheet may be further processed into various forms.

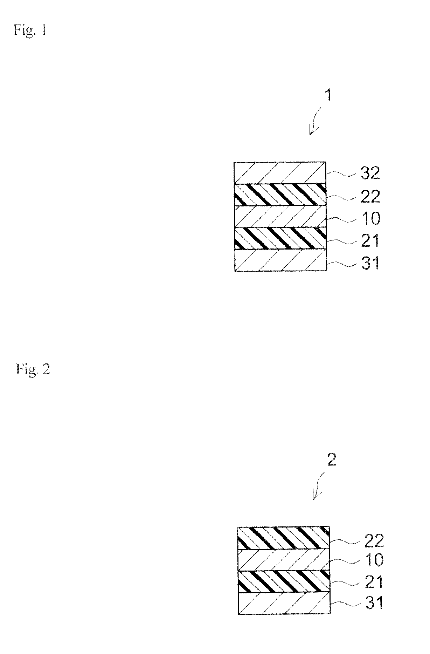

For example, the PSA sheet disclosed herein may have cross-sectional structures schematically illustrated in Fig. 1 to Fig. 6. Among these, Fig. 1 and Fig. 2 show constitutional examples of an adhesively double-faced substrate-backed PSA sheet. PSA sheet 1 shown in Fig. 1 has a constitution where PSA layers 21 and 22 are provided on the two faces (both non-releasing) of substrate 10, with the PSA layers being protected respectively with release liners 31 and 32 each having a release face at least on the PSA layer side. PSA sheet 2 shown in Fig. 2 has a constitution where PSA layers 21 and 22 are provided on the two faces (both non-releasing) of substrate 10 while one of these layers, i.e., PSA layer 21, is protected with release liner 31 having a release face on each side. PSA sheet 2 of this type can be wound into a roll so that the back face of release liner 31 contacts the other PSA layer 22 to have a constitution where PSA layer 22 is also protected with release liner 31..

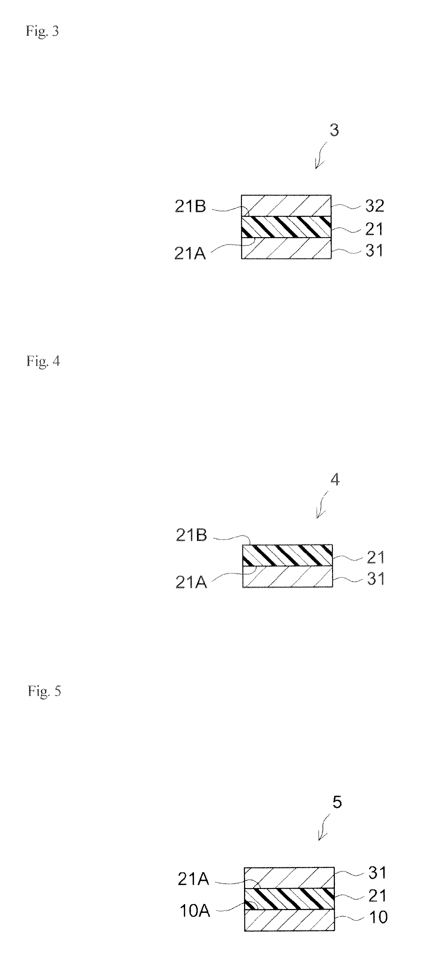

Fig. 3 and Fig. 4 show constitutional examples of a substrate-free double-faced PSA sheet. PSA sheet 3 shown in Fig. 3 has a constitution where two surfaces 21 A and 21B of substrate-free PSA layer 21 are protected respectively with release liners 31 and 32 each having a release face at least on the PSA layer side. PSA sheet 4 shown in Fig. 4 has a constitution where a face (adhesive face) 21 A of a substrate-free PSA layer 21 is protected with release liner 31 having a release face on each side. Winding this allows the back face of release liner 31 to contact the other face (adhesive face) 21B of PSA layer 21 so that the PSA sheet 4 can have a constitution where the other face 21B is also protected with release liner 31.

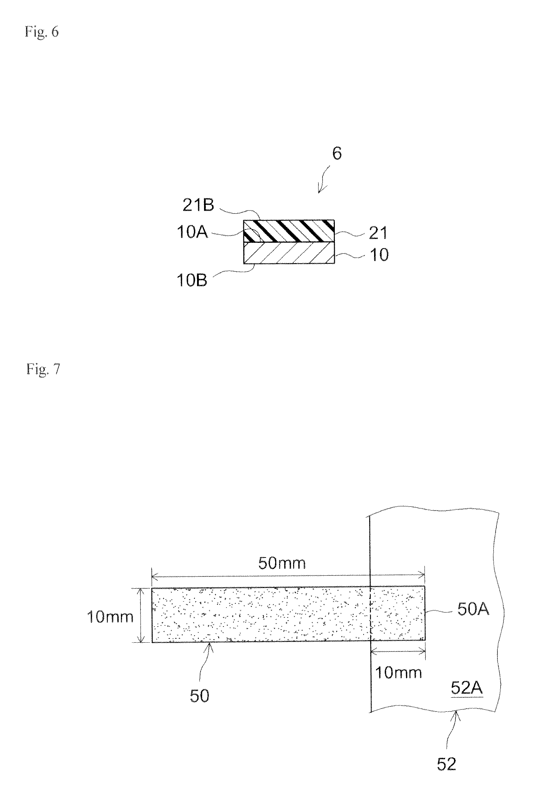

Fig. 5 and Fig. 6 show constitutional examples of an adhesively single-faced substrate-backed PSA sheet. PSA sheet 5 shown in Fig. 5 has a constitution where PSA layer 21 is provided on a face 10A (non-releasing) of substrate 10, with a face (adhesive face) 21 A of its PSA layer 21 being protected with release liner 31 having a release face at least on the PSA layer side. PSA sheet 6 shown in Fig. 6 has a constitution where PSA layer 21 is provided on a face 10A (non-releasing) of substrate 10. With the other face 10B of substrate 10 being a release face, winding PSA sheet 6 allows the other face 10B to contact PSA layer 21 so that a face (adhesive face) 21B of the PSA layer is protected with the other face 10B of the substrate.

As the substrate constituting the PSA sheet, for instance, can be used various kinds of resin film (polyolefin film, polyester film, etc.), paper (Washi, high-grade paper, etc.), woven fabrics or non-woven fabrics, etc., of a single species or a blend, etc., of various kinds of fibrous substances, rubber sheets (natural rubber sheets, etc.), foam sheets (polyurethane foam sheets, etc.) made of foam such as polychloroprene rubber foam, etc., metal foils (aluminum foil, etc.), composites of these, and so on. One or each face of such a substrate may have been subjected to surface treatments such as primer coating, corona discharge treatment, and so on. While the thickness of the substrate can be suitably selected according to the purpose, it is generally about 10 $\mu$m to 500 $\mu$m (typically 10 $\mu$m to 200 $\mu$m). From the standpoint of the light-press repulsion resistance, it is advantageous to use a substrate having a thickness of 10 $\mu$m to 50 $\mu$m.

The PSA layer can be formed, for instance, by providing (typically applying) a PSA composition disclosed herein to a substrate or a release liner and allowing the composition to dry. A PSA sheet comprising such a PSA layer may be fabricated by various methods. For example, when fabricating a substrate-backed PSA sheet, can be employed a method where a PSA composition is directly applied to a substrate and allowed to dry to form a PSA layer on the substrate, and a release liner is overlaid on the PSA layer; a method where a PSA layer formed on a release liner is adhered to a substrate so that the PSA layer is transferred to the substrate while using the release liner as is to protect the PSA layer; or any other method. The PSA composition can be applied, for example, using a commonly-used coater such as gravure roll coater, reverse roll coater, kiss roll coater, dip roll coater, bar coater, knife coater, spray coater, or the like. From the standpoint of increasing the efficiency in removing water or volatiles such as remaining monomers, etc., or accelerating crosslinking reactions, etc., the composition is preferably dried with heating. Although not particularly limited, the drying temperature can be, for instance, around 40 °C to 140 °C (preferably 60 °C to 120 °C). The drying time can be, for instance, about one to five minutes. By allowing the dried PSA layer to age (cure) under suitable conditions, the crosslinking reactions can be allowed to further progress. The aging conditions are not particularly limited. For example, it can be aged in an environment at 40 °C or above (typically 40 °C to 70 °C).

The PSA layer may have a thickness of, for instance, about 5 $\mu$m to 200 $\mu$m (preferably 10 $\mu$m to 100 $\mu$m). The thickness of a PSA layer here refers to a PSA layer thickness per face in case of a double-faced PSA sheet comprising a PSA layer on each face of a substrate. In a PSA sheet to be adhered to elastic foam such as polyurethane foam, etc., in order to obtain good adhesive strength to the foam, it is advantageous that the thickness of the PSA layer to be adhered to the foam is 30 $\mu$m or larger (preferably 40 $\mu$m or larger). On the other hand, from the standpoint of the balance with other adhesive properties or the efficiency in the PSA sheet production, etc., the PSA layer preferably has a thickness of 100 $\mu$m or smaller.

A suitable release liner can be selected and used from release liners known or commonly used in the field of PSA sheets. For example, can be preferably used a release liner having a constitution where a release treatment has been given as necessary to a surface of a substrate formed of various resin films, papers, fabrics, rubber sheets, foam sheets, metal foils, composites of these (e.g., a sheet having a layered constitution where each face of a sheet of paper is laminated with an olefin resin), etc.

The PSA sheet disclosed herein preferably satisfies property (A): in a light-press repulsion resistance test carried out by backing a 10 mm wide by 50 mm long test piece of the PSA sheet with a 10 mm thick polyurethane foam as an elastic foam, pressure-bonding a portion from a first end of the length direction up to a 10 mm line of the backed test piece to a 2 mm thick ABS plate over a region around an outer edge on a face of the plate with a 1 kg roller moved back and forth once, folding the remaining portion of the test piece over the edge of the ABS plate and pressure-bonding it to the other face of the plate, storing the resultant in an environment at 23 °C and 50 % RH for 24 hours and then in an environment at 70 °C for 2 hours, and measuring the distance floated above the ABS plate surface with respect to the first end of the length direction of the test piece, the floated distance is 2 mm or smaller. A PSA sheet exhibiting such excellent light-press repulsion resistance provides excellent handling properties for applications involving adhesion to elastic foam. As the polyurethane foam, trade name "CALM FLEX F-2" (gray color) (or simply "F-2 foam" hereinafter) available from Inoac Corporation is used. This F-2 foam is an elastic, soft polyurethane foam with a density of 25 $\pm$ 2 kg/m$^3$. The floated distance is preferably 1.5 mm or smaller; or more preferably 1.0 mm or smaller (typically 0.5 mm or smaller).

The PSA sheet (typically a double-faced PSA sheet) disclosed herein preferably satisfies property (B): when the PSA sheet is stored at 65 °C for two hours, the total amount of toluene released from the PSA sheet is 2 $\mu$g or less per 100 cm$^2$ area of the PSA sheet. A PSA sheet satisfying such a property (property (B)) can be preferably used for applications demanding reduced VOC, such as home appliances or office automation equipment that are used indoors, or vehicles that could be closed rooms, etc. Among these, it is particularly preferable in an embodiment of use inside an automobile (typically for automobile interior components) where the reduction in VOC is eagerly requested. The amount of toluene released from the PSA sheet can be measured, for instance, by the method described later in the worked examples.

The PSA sheet disclosed herein preferably satisfies property (C): having a 180° peel strength to a polyurethane foam as an elastic foam (or "light-press foam adhesive strength", hereinafter) of 1.5 N/20mm or greater. A PSA sheet satisfying such a property (property (C)) exhibits excellent light-press adhesive strength to foam, and thus, tends to exhibit excellent light-press repulsion resistance as well. The light-press foam adhesive strength is preferably 1.8 N/20mm or greater (e.g., 2.0 N/mm or greater, typically 2.2 N/20mm or greater). The upper limit of the light-press foam adhesive strength is not particularly limited. However, the following aspects should be taken into consideration. That is, when the adhesive strength is to be increased, a means such as increasing the amount oftackifier resin, etc., is taken while such means to increase the adhesive strength is likely to degrade other properties of the PSA sheet. In particular, investigations by the present inventors have revealed that increasing the light-press foam adhesive strength leads to a decrease in the light-press repulsion resistance which had been considered proportional to the light-press foam adhesive strength. Thus, the light-press foam adhesive strength can be set at about 4 N/20mm or less (e.g., 3.0 N/20mm or less, typically 2.5 N/20mm or less). As the polyurethane foam, the F-2 foam described earlier is used. The light-press foam adhesive strength can be measured, for instance, by the method described later in the worked examples.

The PSA sheet disclosed herein preferably satisfies property (D): having an adhesive strength (a 180° peel strength) to a polypropylene (PP) (or "PP adhesive strength", hereinafter) of 8 N/20mm or greater. A PSA sheet satisfying property (A) (preferably satisfying property (A) as well as property (C)) and property (D) is preferable as a double-faced PSA sheet used for adhering an elastic foam such as a polyurethane foam, etc., to a component made of a polyolefin such as PP, etc. It is also preferable as a single-faced PSA sheet comprising the elastic foam as a substrate. The double-faced PSA sheet can be used in an embodiment where one adhesive face is adhered to the elastic foam and the other adhesive face is adhered to a polyolefin (typically a polyolefin component such as a PP component, etc.). In such embodiments of use, with the PP adhesive strength being greater than a prescribed value, it is advantageous to prevent an inconvenience such that it peels off the polyolefin before it peels off the elastic foam. The PP adhesive strength is preferably 9 N/20mm or greater (e.g., 10 N/20min or greater). The PP adhesive strength can be measured, for instance, by the method described later in the worked examples.

EXAMPLES

Several worked examples relating to the present invention are described below, although these specific examples are not intended to limit the scope of the invention. In the description below, "parts" and "%" are based on the mass unless otherwise specified.

<Example 1>

(Preparation of acrylic polymer emulsion)

Into a reaction vessel equipped with a condenser, nitrogen inlet, thermometer and stirrer, 40 parts of ion-exchanged water was placed and stirred at 60 °C under a nitrogen flow for more than one hour. Subsequently, to the reaction vessel, was added 0.1 part of 2,2'-azobis[2-(5-methyl-2-imidazoline-2-yl)propane] dihydrochloride (polymerization initiator). While the system was kept at 60 °C, a monomer emulsion was gradually added dropwise thereto over 4 hours to carry out emulsion polymerization reaction. For the monomer emulsion, was used an emulsion obtained by adding 85 parts of 2-ethylhexyl acrylate (2EHA), 13 parts of methyl acrylate (MA), 1.25 parts of acrylic acid (AA), 0.75 part of methacrylic acid (MAA), 0.048 part of t-lauryl mercaptan (t-LSH, chain transfer agent), 0.02 part of 3-methacryloxypropyltrimethoxysilane (trade name "KBM-503" available from Shin-Etsu Chemical Co., Ltd.) and 2 parts of sodium polyoxyethylene lauryl sulfate (emulsifier) to 30 parts of ion-exchanged water and emulsifying the mixture. After completion of addition of the monomer emulsion, the reaction mixture was further stirred at 60 °C for 3 hours, and subsequently 0.2 part of 35 % aqueous hydrogen peroxide and 0.6 part of ascorbic acid were added. After the reaction mixture was cooled to ambient temperature, the pH was adjusted to 7 by adding 10 % aqueous ammonia. An emulsion of acrylic polymer A was thus obtained. Table 1 shows the compositions of monomers and the chain transfer agent of acrylic polymer A.

(Preparation of PSA composition)

To 100 parts of acrylic polymer A contained in the resulting emulsion, as a tackifier resin, was added and mixed 5 parts based on the solid content of an aqueous emulsion of a polymerized rosin ester having a softening point of 160 °C (trade name "E-865NT" available from Arakawa Chemical Industries, Ltd.). Using 10 % aqueous ammonia as a pH-adjusting agent and polyacrylic acid (trade name "ARON B-500" available from Toagosei Co., Ltd.) as a thickner the pH was adjusted to 8.0 and the viscosity was adjusted to 10 Pa·s. The viscosity was measured over a measurement time of one minute using a model B viscometer with rotor No. 5 at a rotation speed of 20 rpm and at a sample temperature of 30 °C. A PSA composition according to Example 1 was thus obtained. Table 2 shows the type, softening point, amount added of the tackifier resin used.

(Fabrication of PSA sheet)

The resulting PSA composition was applied to a release liner (trade name "75 EPS (M) CREAM (KAI)" available from Oji Specialty Paper Co., Ltd.) having a release face treated with a silicone-based release agent, and allowed to dry at 100 °C for two minutes to form a PSA layer having a thickness of about 60 $\mu$m. Two sheets of the PSA layer-bearing release liner were thus prepared, and the PSA layers were adhered to the respective faces of a non-woven fabric substrate (trade name "SP GENSHI-14" available from Daifuku Paper MGF Co., Ltd.; 42 $\mu$m thick) to fabricate a PSA sheet according to Example 1. The two adhesive faces of this PSA sheet were kept protected with the release liners used for the PSA sheet fabrication.

<Examples 2 to 5>

PSA compositions were prepared in the same manner as Example 1 except that tackifier resins were used in the amounts shown in Table 2. Except that these PSA compositions were used, PSA sheets according to Examples 2 to 5 were fabricated in the same manner as Example 1. In Table 2, zero part under the amount added means that no tackifier resin was added.

<Examples 6 to 13>

PSA compositions were prepared in the same manner as Example 1 except that the types and amounts of tackifier resins were as shown in Table 2. Except that these PSA compositions were used, PSA sheets according to Examples 6 to 13 were fabricated in the same manner as Example 1. In Table 2, "E-625NT" refers to the trade name of an aqueous emulsion of a polymerized rosin ester having a softening point of 125 °C (available from Arakawa Chemical Industries, Ltd.) and "E-200NT" refers to the trade name of an aqueous emulsion of a rosin phenol having a softening point of 145 °C (available from Arakawa Chemical Industries, Ltd.).

<Examples 14 to 18>

Emulsions of acrylic polymer B were prepared in the same manner as Example 1 except that the compositions of materials (monomers and chain transfer agents) used were modified as shown in Table 1. To 100 parts of acrylic polymer B contained in the resulting emulsion, "E-200NT" (tackifier resin) was added and mixed in the amounts shown in Table 2. Except that the types and proportions of acrylic polymer and tackifier resin were thus modified, PSA compositions according to Examples 14 to 18 were obtained in the same manner as Example 1. Except that these PSA compositions were used, PSA sheets according to Examples 14 to 18 were fabricated in the same manner as Example 1.

<Examples 19 to 23>

Emulsions of acrylic polymer C were prepared in the same manner as Example 1 except that the compositions of materials (monomers and chain transfer agents) used were modified as shown in Table 1. To 100 parts of acrylic polymer C contained in the resulting emulsion, "E-865NT" (tackifier resin) was added and mixed in the amounts shown in Table 2. Except that the types and proportions of acrylic polymer and tackifier resin were thus modified, PSA compositions according to Examples 19 to 23 were obtained in the same manner as Example 1. Except that these PSA compositions were used, PSA sheets according to Examples 19 to 23 were fabricated in the same manner as Example 1.

Table 1 shows the compositions of monomers and the chain transfer agents in acrylic polymers A to C used in Examples 1 to 23. The gel fractions and molecular weights (weight average molecular weights of sol fractions: Mw) of acrylic polymers A to C are also shown in Table 1.

[Table 1]

Table 1

| | Acrylic polymer | | |
|---|---|---|---|
| | A | B | c |
| Monomers (parts) | | | |
| BA | - | 70 | 30 |
| 2EHA | 85 | 30 | 70 |
| MA | 13 | - | |
| AA | 1.25 | 3 | 1.5 |
| MAA | 0.75 | - | 2.5 |
| KBM-503 | 0.02 | 0.03 | 0.02 |
| Chain transfer agent (parts) | | | |
| LSH | - | 0.05 | 0.033 |
| t-LSH | 0.048 | - | - |
| Gel fraction | 50 % | 30% | 40% |
| Mw | $40 \times 10^4$ | $70 \times 10^4$ | $80 \times 10^4$ |

In Table 1, BA indicates n-butyl acrylate; 2EHA, 2-ethylhexyl acrylate; MA, methyl acrylate; AA, acrylic acid; MAA, methacrylic acid; KBM-503, 3-methacryloxypropyltrimethoxysilane; LSH, n-lauryl mercaptan; and t-LSH, t-lauryl mercaptan.

[Measurement of light-press foam adhesive strength]

As an adherend, was obtained a 10 mm thick polyurethane foam as an elastic foam (trade name "CALM FLEX F-2" (gray color) available from Inoac Corporation) cut to 30 mm wide by 100 mm long. In an environment at 23 °C, the release liner covering one of the adhesive faces of the PSA sheet fabricated in each example was removed, and to the exposed adhesive face, a 25 $\mu$m thick polyethylene terephthalate (PET) film was adhered as a backing. The backed PSA sheet was cut to 20 mm wide by 100 mm long to obtain a test piece. From the other adhesive face of the test piece, the release liner was peeled off from one end of the length direction up to approximately the 2/3 line. With the exposed adhesive face facing down, the test piece was placed on top of a polyurethane foam and pressure-bonded thereto with a 85 mm diameter roller weighing 2 kg moved back and forth once at a speed of 30 cm/min in the length direction of the test piece. After the test piece thus pressure-bonded to the polyurethane foam was stored at 23 °C for 30 minutes, in a measurement environment at 23 °C and 50 % RH, using a tensile tester, the 180° peel strength was measured based on JIS Z0237 (2004). The measured length was at least 10 mm. Three test pieces were fabricated from the PSA sheet according to each example, and the average value of the results of three measurements taken with these test pieces was determined. The results are shown in Table 2.

[Measurement of PP adhesive strength]

In an environment at 23 °C, the release liner covering one adhesive face of each PSA sheet was removed, and to the exposed adhesive face, a 25 $\mu$m thick PET film was adhered as a backing. This backed PSA sheet was cut to 20 mm wide by 100 mm long to obtain a test piece. The release liner covering the other adhesive face of the test piece was removed, and the exposed adhesive face was pressure-bonded to a polypropylene (PP) plate as an adherend with a 2 kg roller moved back and forth once. After the resultant was stored at 23 °C for 30 minutes, in a measurement environment at 23 °C and 50 % RH, using a tensile tester, the 180° peel strength was measured at a tensile speed of 300 mm/min based on JIS Z0237 (2004). Three test pieces were fabricated from the PSA sheet according to each example, and the average value of the results of three measurements taken with these test pieces was determined. The results are shown in Table 2.

[Test of light-press repulsion resistance]

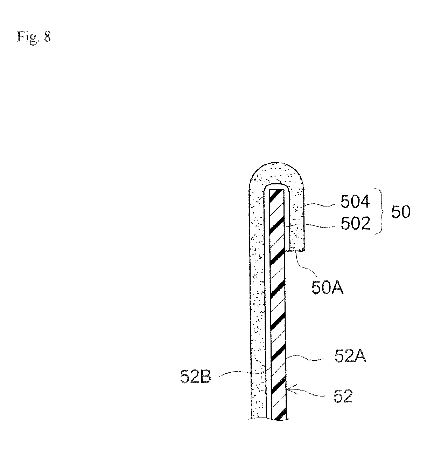

In an environment at 23 °C, the release liner covering one adhesive face of each PSA sheet was removed, and the exposed adhesive face was placed on top of a 10 mm thick polyurethane foam as an elastic foam (trade name "CALM FLEX F-2" (gray color) available from Inoac Corporation) and pressure-bonded with a 1 kg roller moved back and forth once in the length direction of the test piece. This was cut to 10 mm wide by 50 mm long to fabricate a test piece. As shown in Fig. 7, from the other adhesive face of this test piece 50, the release liner was removed, and a portion from a first end 50A of the length direction up to the 10 mm line (i.e., a 10 mm by 10 mm adhesion area) of the exposed adhesive face was pressure-bonded to a region around an outer edge of one face 52A of a 2 mm thick ABS plate 52 with a 95 mm diameter roller weighing 1 kg moved back and forth once at a speed of about 30 cm/min. Subsequently, as shown in Fig. 8, the remaining portion of test piece 50 was folded over the edge of ABS plate 52 and adhered to the other face 52B. After the resultant was left in an environment at 23 °C and 50 % RH for 24 hours and then in an environment at 70 °C for 2 hours, the floated distance at the first end 50A of test piece 50 was measured. Three test pieces were fabricated from the PSA sheet according to each Example, and the average value of the floated distances of three measurements taken with these test pieces was determined. In Fig. 8, reference numeral 502 indicates the PSA sheet, reference numeral 504 indicates the polyurethane foam pressure-bonded to one adhesive face of the PSA sheet. The results are shown in Table 2.

[Table 2]

Table 2

| | Acrylic polymer | Tackifier resin | | | Adhesive strength (N/20mm) | | Light-press repulsion resistance (mm) |
|---|---|---|---|---|---|---|---|
| | | Type | Softening point (°C) | Amount added (parts) | Foam | PP | |
| Ex. 1 | A | E-865NT | 160 | 5 | 2.9 | 11.9 | 0.5 |
| Ex. 2 | A | E-865NT | 160 | 10 | 2.4 | 13.3 | 0.9 |
| Ex. 3 | A | E-865NT | 160 | 15 | 2.8 | 13.1 | 1.7 |
| Ex. 4 | A | E-865NT | 160 | 20 | 2.8 | 13.3 | 4.1 |
| Ex. 5 | A | -- | -- | 0 | 2.7 | 7.8 | 1.2 |
| Ex. 6 | A | E-625NT | 125 | 5 | 2.2 | 8.6 | 1.0 |
| Ex. 7 | A | E-625NT | 125 | 10 | 2.1 | 9.9 | 1.0 |
| Ex. 8 | A | E-625NT | 125 | 15 | 2.0 | 10.8 | 1.7 |
| Ex. 9 | A | E-625NT | 125 | 20 | 2.4 | 12.5 | 4.4 |
| Ex. 10 | A | E-200NT | 145 | 5 | 1.9 | 9.3 | 1.2 |
| Ex. 11 | A | E-200NT | 145 | 10 | 2.1 | 11.5 | 2.0 |
| Ex. 12 | A | E-200NT | 145 | 15 | 2.4 | 12.6 | 2.2 |
| Ex. 13 | A | E-200NT | 145 | 20 | 2.4 | 12.5 | 4.4 |
| Ex. 14 | B | E-200NT | 145 | 5 | 1.8 | 10.0 | 0.7 |
| Ex. 15 | B | E-200NT | 145 | 10 | 1.9 | 11.5 | 1.3 |
| Ex. 16 | B | E-200NT | 145 | 15 | 1.6 | 11.9 | 1.0 |
| Ex. 17 | B | E-200NT | 145 | 30 | 4.4 | 12.0 | 10 |
| Ex. 18 | B | -- | -- | 0 | 1.9 | 7.8 | 1.0 |
| Ex. 19 | C | E-865NT | 160 | 5 | 1.0 | 10.3 | 0.5 |
| Ex. 20 | C | E-865NT | 160 | 10 | 0.8 | 11.7 | 1.0 |
| Ex. 21 | C | E-865NT | 160 | 15 | 0.8 | 12.1 | 0.6 |
| Ex. 22 | C | E-865NT | 160 | 20 | 1.4 | 12.7 | 1.3 |
| Ex. 23 | C | -- | -- | 0 | 1.7 | 7.8 | 1.3 |

As shown in Table 2, as the amount of a tackifier resin having a softening point of 125 °C or above was decreased, the light-press repulsion resistance was found to have a tendency to increase. In particular, as is clear from comparisons between Examples 3 and 4, Examples 12 and 3, Examples 16 and 17, and Examples 21 and 22, by adding a tackifier resin at less than 20 parts relative to 100 parts of the acrylic polymer, the light-press repulsion resistance was significantly increased. Comparisons between Examples 1 and 6 as well as Examples 14 and 19 reveal that as the softening point of the tackifier resin becomes higher, the light-press repulsion resistance tends to increase. On the other hand, the PSA sheets according to Examples 5, 18 and 23 each having a PSA layer free of tackifier resins exhibited poorer light-press repulsion resistance, and their adhesive strength (especially the PP adhesive strength) was found to have a tendency to decrease.

[Measurement of the amount of toluene released]

With each of the PSA sheets obtained in Examples 1 to 23, a sample containing its PSA layer having an area of 100 cm$^2$ was placed in an airtight bag having a capacity of 10 L and the bag was sealed up. After the bag was stored at 65 °C for two hours, using a headspace auto-sampler, 1.0 mL of the gas inside the bag was injected into a gas chromatography analyzer (GC analyzer) to measure the amount of toluene. From the measurement results, the amount ($\mu$g/100cm$^2$) of toluene released from the sample was determined. As a result, with each of the PSA sheets according to Examples 1 to 23, the amount of toluene released was 2 $\mu$g/100cm$^2$ or less.

Although specific embodiments of the present invention have been described in detail above, these are merely examples and do not limit the scope of the claims. The art according to the claims includes various modifications and changes made to the specific embodiments illustrated above.

**Claims**

1. A pressure-sensitive adhesive composition comprising an acrylic polymer as a base polymer, and a tackifier resin having a softening point of 125 °C or above, wherein the tackifier resin content is less than 20 parts by mass relative to 100 parts by mass of the acrylic polymer.

2. The pressure-sensitive adhesive composition according to Claim 1 comprising a solvent that comprises primarily water or ethyl acetate.

3. The pressure-sensitive adhesive composition according to Claim 1 or 2, wherein the acrylic polymer is a polymer synthesized by polymerizing a monomer component comprising an alkyl (meth)acrylate represented by the following formula (1):

$$CH_2=CR^1COOR^2 \qquad (1)$$

(in the formula, $R^1$ is a hydrogen atom or a methyl group, and $R^2$ is an alkyl group having 6 or more carbon atoms) at a proportion of 50 % by mass or greater.

4. The pressure-sensitive adhesive composition according to any one of Claims 1 to 3, wherein the tackifier resin is selected from rosin-based resins, rosin derivative resins and terpene-based resins.

5. A pressure-sensitive adhesive sheet comprising a pressure-sensitive adhesive layer, wherein the pressure-sensitive adhesive layer comprises an acrylic polymer as a base polymer and a tackifier resin having a softening point of 125 °C or above, with the tackifier resin content being less than 20 parts by mass relative to 100 parts by mass of the acrylic polymer.

6. The pressure-sensitive adhesive sheet according to Claim 5 satisfying the following property:

(A) in a light-press repulsion resistance test carried out by backing a 10 mm wide by 50 mm long test piece of the pressure-sensitive adhesive sheet with a 10 mm thick polyurethane foam as an elastic foam, pressure-bonding a portion from a first end of the length direction up to a 10 mm line of the backed test piece to a 2 mm thick acrylonitrile-butadiene-styrene copolymer resin plate (ABS plate) over a region around an outer edge on a face thereof with a 1 kg roller moved back and forth once, folding the remaining portion of the test piece over the edge of the ABS plate and pressure-bonding it to the other face of the plate, storing the resultant in an environment at 23 °C and 50 % RH for 24 hours and then in an environment at 70 °C for 2 hours, and measuring the distance floated above the ABS plate surface with respect to the first end of the length direction of the test piece, the floated distance is 2 mm or smaller.

7. The pressure-sensitive adhesive sheet according to Claim 5 or 6 satisfying the following property:

(B) when the pressure-sensitive adhesive sheet is stored at 65 °C for two hours, the total amount of toluene released from the pressure-sensitive adhesive sheet is 2 $\mu$g or less per 100 cm$^2$ area of the pressure-sensitive adhesive sheet.

8. The pressure-sensitive adhesive sheet according to any one of Claims 5 to 7 satisfying the following property:

(D) having an adhesive strength to a polypropylene plate of 8 N/20mm or greater.

9. The pressure-sensitive adhesive sheet according to any one of Claims 5 to 8 to be adhered to an automobile interior component.

10. A self-adhesive polyurethane foam comprising:

the pressure-sensitive adhesive sheet according to any one of Claims 5 to 8, and
a polyurethane foam adhered to the pressure-sensitive adhesive sheet, wherein
the pressure-sensitive adhesive sheet is constituted as a double-faced pressure-sensitive adhesive sheet, and
the polyurethane foam is adhered to an adhesive face of the double-faced pressure-sensitive adhesive sheet.

Fig. 1

1

| 32 |
| 22 |
| 10 |
| 21 |
| 31 |

Fig. 2

2

| 22 |
| 10 |
| 21 |
| 31 |

Fig. 3

```
            3
            ↙

21B ─╮  ┌──────────┐  ╭─ 32
      │  ├──────────┤  ╭─ 21
21A ─╯  └──────────┘  ╰─ 31
```

Fig. 4

```
            4
            ↙

21B ─╮  ┌──────────┐  ╭─ 21
      │  │          │  ╭─ 31
21A ─╯  └──────────┘
```

Fig. 5

```
            5
            ↙

21A ─╮  ┌──────────┐  ╭─ 31
      │  ├──────────┤  ╭─ 21
10A ─╯  └──────────┘  ╰─ 10
```

Fig. 6

6

21B

10A

21

10

10B

Fig. 7

50mm

10mm

50A

50

10mm

52A

52

Fig. 8

Europäisches
Patentamt

European
Patent Office

Office européen
des brevets

**EUROPEAN SEARCH REPORT**

Application Number

EP 13 16 9710

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 177 584 A1 (NITTO DENKO CORP [JP]) 21 April 2010 (2010-04-21) * paragraphs [0002], [0003], [0541] - [0044], [0085]; tables 2,3 * ----- | 1-10 | INV. C09J7/02 C09J133/08 C08F220/18 |
| A | EP 2 062 955 A1 (NITTO DENKO CORP [JP]) 27 May 2009 (2009-05-27) * paragraphs [0001], [0004], [0052], [0053], [0054]; example 1 * ----- | 1-10 | |

TECHNICAL FIELDS
SEARCHED        (IPC)

C09J
C08F

The present search report has been drawn up for all claims

| Place of search | Date of completion of the search | Examiner |
|---|---|---|
| The Hague | 22 August 2013 | Plehiers, Mark |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 16 9710

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2013

| Patent document cited in search report | | Publication date | Patent family member(s) | | Publication date |
|---|---|---|---|---|---|
| EP 2177584 | A1 | 21-04-2010 | CN | 101724367 A | 09-06-2010 |
| | | | EP | 2177584 A1 | 21-04-2010 |
| | | | JP | 2010095610 A | 30-04-2010 |
| | | | US | 2010099318 A1 | 22-04-2010 |
| EP 2062955 | A1 | 27-05-2009 | CN | 101440265 A | 27-05-2009 |
| | | | EP | 2062955 A1 | 27-05-2009 |
| | | | JP | 4766571 B2 | 07-09-2011 |
| | | | JP | 2009126934 A | 11-06-2009 |
| | | | US | 2009137727 A1 | 28-05-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012122676 A
- JP 2010095610 A